# EUROPEAN PATENT APPLICATION

(11) **EP 1 768 306 A1**
(43) Date of publication of application: **28.03.2007**
(21) Application number: 05020553.3
(22) Date of filing: 21.09.2005
(51) Int. Cl.: H04L 12/24

(54) **Method for integrating a network element into a telecommunications network**

(71) Applicant: SIEMENS AKTIENGESELLSCHAFT, 80333 München (DE)
(72) Inventor: Remedios, Orlando, 2725-045 Algueirao (PT); Santos, Paolo, 3030-033 Coimbra (PT)
(74) Representative: Fischer, Michael

(57) **Abstract**

A method for integrating a network element (NE) into a telecommuncations network is presented, whereby
- the network element is detected in the network,
- a request is sent to a mediator component requesting the retrieval of a script out of a database,
- the retrieved script contains commands adapted to communicate with the network element,
- the script is executed to configure the network element according the commands contained in the script.

## Description

A method for integrating a network element into an existing network, whereby a mediator is modified with embedded script, is described.

In order to effectively manage a telecommunications network, remotely managing equipment after geographical dispersion should be achieved. Consequently, the development of technology that allows communication with such equipment is sought. However, due to the wide range of equipment available on the market and to the different configuration methods needed to configure such equipment, the introduction and integration of the equipment into an existing network is a non-trivial task.

So far, the integration of new equipment within a common management platform involved intensive analysis accompanied by considerable development and testing efforts, making the process expensive and time-consuming. Thus, timely development of a management platform, in particular in view of bringing the platform on the market by a set date, imposes strict scheduling and may lead to commercial and functional compromises that are neither beneficial to the vendor nor to the customer.

It is usual that each vendor has its own proprietary configuration methods and/or protocols for equipment which is not publicly disclosed. Without this information, however, it is difficult to provide the needed support of such newly introduced equipment. Thus, full management capability of the network elements being integrated is difficult.

One goal to be achieved is seen in providing a method for easily integrating a network element into a telecommunications network.

This goal can be achieved by providing a method for integrating a network element into a telecommunications network, comprising:
- detecting the network element in the existing network,
- sending a request to a mediator component requesting the retrieval of a script out of a database, whereby the retrieved script contains commands adapted to communicate with the network element,
- executing the script to configure the network element according the commands contained in the script.

The method has the advantage that new equipment can rapidly be integrated into an existing network. Equipment specific scripts can be easily retrieved and developed, leading to reduced development and integration test times. Full system regression tests need no longer be performed each time a script is changed, as the script contains commands that are already adapted to communicate with the network element such that it may be configured.

Advantageously, the above method allows an application's user to develop the needed scripts when the configuration information is accessible only with restriction.

The method also has the advantage that it is possible for network management tools to enlarge the portfolio of supported equipments at a higher pace.

According to a preferred extension of the method, the mediator component includes an interpreter, in which, the commands of the script are embedded in addition to code-based commands of the existing network. Thus, the code based commands must not be modified. The only required modifications due to the introduction of the new network element involve easily developed scripts.

It is favoured that the request for retrieval of a script is initiated by an application layer. As the application layer can comprise a GUI (General User Interface), specifying the retrieval of a script based on the type of network element inserted into the network is simplified.

The script based commands of the scripts retrieved from a data storage include codes programmed in alternative programming languages, for example classes of object oriented programs. The codes are included into the script based solely on the request arriving in the mediator component. Thus, the scripts enable the network or the network management system to be adapted to the added network element without a having to recompile the entire network's management codes which would otherwise be the case when a new network element is: introduced.

The detection of the network element in the existing network can be performed by means of
- sending the appropriate, network element specific information from the application layer,
- electronic means,
- a predetermined plan.

The predetermined plan may be based on a time interval, in which known network elements are desired to be integrated into the network or enabled.

It is preferred to have the network element configured by means of SNMP.

The described subject matter is further explained by the following examples and drawings, whereby:
- Drawing 1: shows a first management system for managing equipment introduced into an existing network,
- Drawing 2: shows a message sequence diagram showing commands passed through different layers of a network environment to enable integration of the new network element into the existing network.

A telecommunications network can be based on specific coding for each equipment in the network. Alternatively, a mediator component may be provided Which is of a generic type that provides rules based integration of equipment, whereby the rules are extendable every time a new equipment or device is added to the network. Regression and bring-up tests can confirm that the management system still responds correctly even if a small change is needed in the code to allow the support of the new device. With this rule-based solution, it is possible to write rules to configure the equipment. In order to do this, many possible coding cases need to be covered that refer to the different situations that may arise when the new equipment is introduced into the network. Thus, conditional steps and functions are defined in the rules, such as "for", "while", "do", "if-then-else", "else if". This gives flexibility to the management system, such that new equipment may easily be integrated in the network.

Another flexible management system could be characterised by using language-independent scripts to perform the configuration. These may run directly in the system and outside of the main program. It is advantageous that with this method, only a small set of parameters is passed as arguments in order to configure the equipment. This scripting solution therefore advantageously results in only a short range of actions being necessary to configure the equipment.

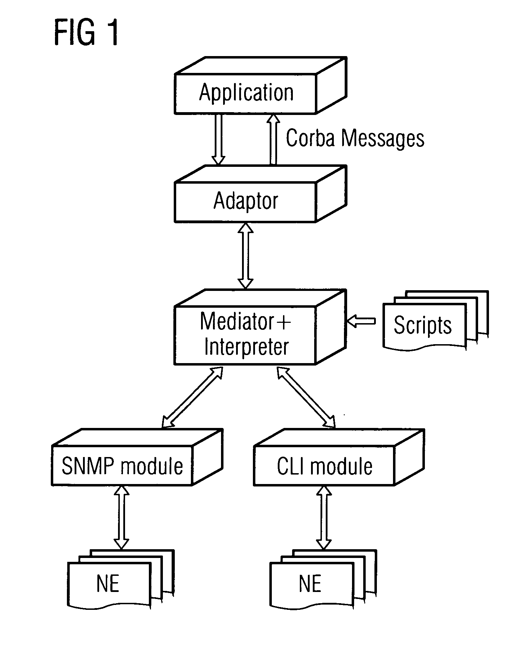

Referring to Drawing 1, a network environment, also called a framework, containing network elements NE, is presented. One or more network elements can be configured using one or more protocols. As communication protocols, SNMP and CLI are represented, however the choice is not restricted to these two. SNMP stands for Simple Network Management Protocol and is a protocol which supports the monitoring of network-attached devices for any conditions that warrant administrative attention. SNMP uses a specified set of commands and queries. The CLI (Command Line Interface) consists of a command line communication used to configure network elements. The SNMP and CLI modules presented in the drawing represent the code logic necessary to implement such protocols. This southbound component traffic is decoupled from so-called northbound traffic, which is present between a mediator component and an application layer of an administrative system, both described below.

A mediator component is provided, which is connected to both the SNMP and the CLI modules. The mediator component includes a function that retrieves a script according to a request sent from an application layer. Preferably, an adaptor layer is provided between the application layer and the mediator layer. The adaptor layer thus processes the requests from the application layer.

A request may be passed from the application to an adaptor that is designed to communicate with the application, i.e., an application specific adaptor. The application specific adaptor will convert the request from the application in a format understandable to the mediator. It is preferred that Corba messages are used to communicate between the adaptor and the application layers. Other examples of suitable languages for this commmunication would be RMI, Web-Services and HTTP.

An "application" or "application layer" is considered to be a part of a network environment that employs the capabilities of a programmed device directly to a task that the operator or programmed device wishes to perform. This task may be the passing of information to an interface that acts between the operator and a network element, for example. An example of an application is a field which may be inputted with values generated by a programmed device or an operator. An application may include a GUI that allows input of values that will influence the task to be performed.

An "interface" is considered to be an entity that communicates with at least two other entities, in particular programs, that may or may not be using different languages. It can act as a link between different parts of a management system so that a consistent form of communication is possible in the system.

The mediator component processes the converted request, distinguishing it based on the equipment type, and sends appropriate commands to the equipment in question. It is also responsible for:
1. Receiving a request in a format consistent throughout the management system.
2. Selecting and executing an appropriate script.
3. Processing the request in the script to communicate with the equipment.
4. Providing the script with the full information provided by the information sent from the application to the network elements.
5. Passing the information returned from the network element back to the adaptor which in turn will send it back to the northbound application.

in the case that a driver becomes available for controlling the newly introduced network element, the code from the driver may be integrated directly into the script or pointed to by the script without updating the codes in the network in their entirety. The driver may be periodically provided by a vendor, or upon request of the network management.

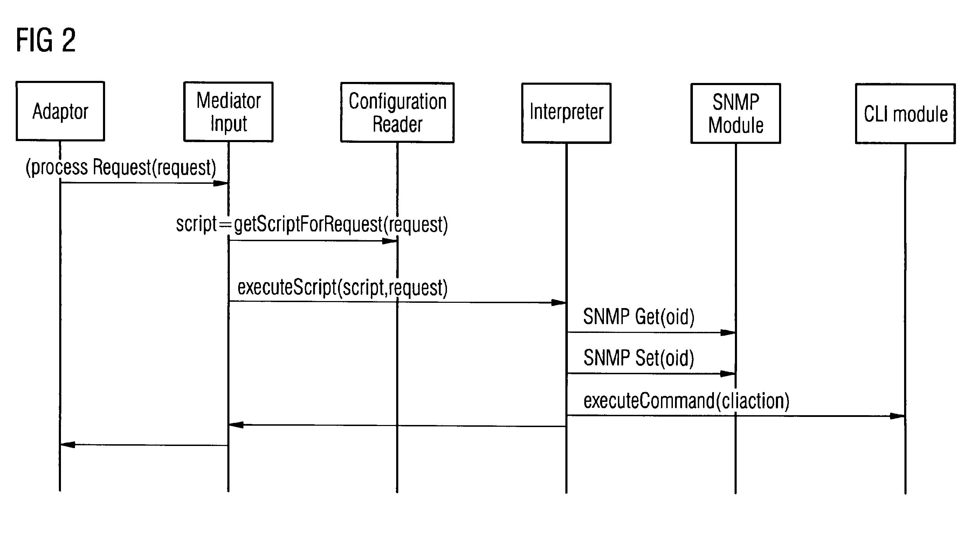

Drawing 2 shows a message sequence diagram. An adaptor processes a request from the application layer by means of the function processRequest(roquest). The adaptor adapts the request into a format usable by the mediator component. The said mediator component is divided into a mediator input part, a configuration reader part and an interpreter part

The mediator input part receives a request from an application or an adaptor layer. Via this mediator input component, the mediator sets a variable "script" to be the result of a function getScriptForRequest (request), which contains the argument "request" sent from the adaptor or directly from the application layer.

In the configuration reader, a script is selected from a data storage such as a database or a Hard-drive. The script is selected based on the action requested by the application, which may be an external one, and on the equipment to be configured. The selected script is then passed to the Interpreter that will execute it.

The Interpreter needs to provide the script the information that was passed from the application. To the script it shall be possible to access any of the information and fill up the return structures.

During the runtime of the script, several requests can be sent at any point to configure the eqipment. For this, the Interpreter will provide the support of the communication module to the script. Additionally, several different communication modules are possible, even with the same script. Thus, the script only needs to contain logic necessary to implement the request for the selected equipment.

The Interpreter module also may support an object oriented language script. This allows an easier interaction between the Interpreter and the script itself.

With a function getScriptForRequest (request), a script is selected to be executed by the interpreter. This script is selected based on the action requested by the application layer, which can be an external one, and on the equipment to be configured. One example of an existing scripting language that could be used is Python.

The function executeScript is called in the Interpreter to execute the actions contained in the selected script. The script can for example generate several SNMP commands to the network element. For instance it can get and set objects in the network elements' MIB (Management Information Base), which is a type of database used to manage the devices in a communications network and is made use of by SNMP. This is shown by the labels Get(oid) and Set(oid) in the message sequence diagram.

The script can also execute commands in the network element using the CLI. The support of the CLI interface is useful as it may be the only way to perform configurations (set options), either because there are only a limited set of SNMP operations available, or because the supplier only provides a read-only MIB.

Even though equipment vendors may not release internal configuration information, the CLI commands are public. Thus, with the presented methods, all the equipments that support CLI are configurable. The scripts, however, also support execution of CLI commands. This feature is particularly effective when CLI commands are changed due to network elements being added to the existing network. As they can be included in the scripts, no further changes are necessary even when CLI commands are changed.

The above presented methods allow the support of any communications protocol. SNMP is one example TL1 is also a simple protocol to implement and can be easily added. It stands for Transaction Language 1, a management protocol used in telecommunications. It is a cross-vendor, cross-technology man-machine language that is widely used, for example to manage optical and broadband access infrastructures.

For the supported protocols, equipment requests can be performed at any time. So a call can be sent in SNMP, for example to get hold of the configured ports, and then a call in CLI to execute actions not available in SNMP, such as the configuration of EAPS in Extreme Networks equipments.

Independent of the supported protocols, however, no redesign of the framework presented herewith is needed to integrate new protocols, commands or drivers. Only the integration of the new network components is necessary.

### List of Abbreviations

- NE: Network Element
- Oid: Object Identifier
- SNMP: Simple Network Management Protocol
- MIB: Management information pase
- CLI: Command Line Interface
- STP: Spanning Tree Protocol

## Claims

1. Method for integrating a network element (NE) into a telecommuncations network, whereby
- the network element is detected in the network,
- a request is sent to a mediator component requesting the retrieval of a script out of a database,
- the retrieved script contains commands adapted to communicate with the network element,
- the script is executed to configure the network element according the commands contained in the script.

2. Method according to claim 1, whereby the mediator component includes an interpreter, in which the commands of the script are embedded in addition to code based commands of the existing network.

3. Method according to one of the claims 1 or 2, whereby the request for retrieval of a script is initiated by an application layer.

4. Method according to one of the preceding claims, whereby the detection of the network element is performed according to one of the following methods:
- the network element is detected according to an information from an application layer,
- the network element is detected by electronic detection means,
- the network element is detected according to a predetermined plan.

5. Method according to one of the preceding claims, whereby configuration of the network element is performed using Simple Network Management Protocol (SNMP).

6. Method according to one of the preceding claims, whereby configuration of the network element is performed using Command Line Interface (CLI).
